# DEMANDE DE BREVET EUROPEEN

(11) **EP 1 306 803 A1**
(43) Date de publication de la demande: **02.05.2003**
(21) Numéro de dépôt: 02079269.3
(22) Date de dépôt: 16.10.2002
(51) Int. Cl.: G06T 5/30

(54) **Station d'imagerie médicale à segmentation rapide d'image**

(30) Priorité: 23.10.2001 FR 0113672
(71) Demandeur: Koninklijke Philips Electronics N.V., 5621 BA Eindhoven (NL)
(72) Inventeur: Deschamps, Thomas, c/o Société Civile S.P.I.D., 75008 Paris (FR); Cohen, Laurent, c/o Société Civile S.P.I.D., 75008 Paris (FR)
(74) Mandataire: de la Fouchardière, Marie-Noelle

(57) **Abrégé**

L'invention concerne une station d'imagerie médicale incluant des moyens de segmentation [SEG] pour segmenter au moins un objet imagé dans une image [IM] présentant des niveaux de gris, par propagation [PROP] d'un front à partir d'au moins un point initial positionné [POS] dans l'image sur l'objet imagé. La vitesse de propagation du front dépend desdits niveaux de gris en chaque point dit point courant et les moyens de segmentation [SEG] segmentent l'image [IM] entre les points [P[I]] parcourus par le front et les points non parcourus par le front. Selon l'invention, les moyens de propagation du front [PROP] sont couplés avec des moyens de détection automatique [DET] d'une sortie du front de propagation de l'objet imagé en un point courant [P[I]]. Des moyens de fixation locale de la vitesse de propagation à zéro [FIX[I]] en ce point courant [P[I]] sont activés en cas de détection d'une sortie du front de propagation.

## Description

L'invention concerne une station d'imagerie médicale incluant des moyens d'acquisition pour obtenir des images présentant des niveaux de gris, des moyens d'affichage pour afficher les images, des moyens de segmentation pour segmenter au moins un objet imagé dans une image, à l'aide de moyens de propagation d'un front sur les points de l'image à partir d'au moins un point initial positionné dans l'image sur l'objet imagé par des moyens de positionnement de points, propagation dont la vitesse dépend desdits niveaux de gris en chaque point dit point courant, la segmentation étant réalisée entre les points parcourus par le front et les points non parcourus par le front.

De multiples modalités d'acquisition d'images médicales peuvent fournir des images présentant des niveaux de gris. Ainsi, l'invention peut être utilisée pour des images obtenues par techniques ultrasonores, radiologiques ou encore de résonance magnétique. On peut noter que les niveaux de gris peuvent éventuellement être remplacés de manière équivalente par des niveaux d'une couleur particulière qui soit différente du gris.

Des moyens de segmentation selon le paragraphe introductif utilise en général des algorithmes du type plus court chemin : algorithme de Dijkstra ou A*. Les algorithmes de type plus court chemin recherchent le trajet le moins coûteux entre les chemins possibles pour la propagation d'un front. La propagation du front est réalisée selon des équations de propagation qui peuvent avantageusement être discrétisées afin de réaliser un calcul des coûts de proche en proche. On parle alors d'algorithme de « Fast-Marching » en anglais. La propagation est continue et se fait dans toutes les directions. Le coût des chemins est donné à l'aide d'une équation donnée, par exemple, l'équation d'Eikonal avec une vitesse dépendant des niveaux de gris dans l'image. Par exemple, pour un vaisseau clair sur un fond foncé, le front se propagera plus rapidement à l'intérieur du vaisseau. Cela permet d'obtenir une segmentation rapide et de précision généralement moyenne d'objets imagés en séparant les points qui ont été parcourus par le front de ceux qui ne l'ont pas été. Le livre « Level sets methods and fast-marching methods, evolving interfaces in computational geometry, fluid mechanics, computer science and material science » de J.A. Sethian édité par Cambridge University Press, 1999, explique plus exactement le fonctionnement de tels algorithmes. La propagation pouvant se faire en deux ou en trois dimensions dans l'état de la technique, il est notable de souligner que l'invention peut être également mise en oeuvre pour des images planes respectivement en deux dimensions ou des images spatiales en trois dimensions. De tels moyens de segmentation sont par exemple connus du brevet européen EP1058913.
Les moyens de segmentation selon l'état de la technique fonctionnent correctement lorsque les niveaux de gris entre l'intérieur d'un objet imagé et l'extérieur sont très différents, c'est-à-dire qu'il existe un fort contraste entre les deux zones. Lorsqu'en revanche le contraste est moins important, le front ne s'arrête pas aux frontières de l'objet et continue à se propager à l'extérieur de l'objet. La segmentation obtenue est alors fausse avec les inconvénients que cela peut présenter, en particulier dans le domaine médical. Cet inconvénient existe notamment pour les objets longilignes pour lesquels, la propagation se faisant dans toutes les directions et ne possédant pas de critère d'arrêt dédié à l'éviter, le front se propage hors de l'objet dans les directions où l'objet possède les plus petites dimensions.

Un but de l'invention est de fournir une station d'imagerie médicale incluant des moyens de segmentation qui permettent d'éviter les « fuites » de la propagation du front en particulier lorsque le contraste est faible et/ou que l'objet à imager est longiligne. Eviter les « fuites » est primordial pour l'usage de la station d'imagerie pour des vaisseaux en deux ou trois dimensions. Une station d'imagerie médicale conforme au paragraphe introductif est remarquable selon l'invention en ce que les moyens de propagation du front sont couplés avec des moyens de détection automatique d'une sortie du front de propagation de l'objet imagé en un point courant, des moyens de fixation locale de la vitesse de propagation à zéro en ce point courant étant activés en cas de détection d'une sortie du front de propagation.
L'invention propose ainsi une étape de fixation locale de la vitesse de propagation à zéro en un point courant. Cette étape permet notamment d'arrêter localement la propagation alors que la propagation continue sur d'autres parties de l'image. Dans le cas particulier de vaisseaux, il est avantageux de « geler des points » en attribuant une valeur nulle à la vitesse de propagation en des points qui se situent en dehors du vaisseau et donc en rendant la vitesse en ces points indépendante de l'image. En effet dans ce cas la propagation du front se poursuit le long du vaisseau mais est arrêtée pour des points où une sortie de l'objet par le front est détectée. La détection de sortie de l'objet par le front est réalisée selon plusieurs modes de réalisation présentés ci-après.
L'invention concerne aussi un dispositif de segmentation destiné à être utilisé au sein d'une station d'imagerie médicale et un procédé de segmentation. L'utilisation d'une station d'imagerie médicale selon l'invention permet d'obtenir une segmentation d'image très rapide et précise y compris dans le cas d'un faible contraste et/ou dans le cas de la segmentation d'un objet longiligne. Les moyens d'affichage peuvent par conséquent afficher la segmentation en deux ou trois dimensions ainsi qu'éventuellement son évolution durant la propagation du front.

L'invention sera mieux comprise à la lumière de la description suivante de quelques modes de réalisation, faite à titre d'exemples non limitatifs et en regard des dessins annexés, dans lesquels :
- la figure 1 représente un diagramme schématique d'une station d'imagerie médicale selon l'invention,
- la figure 2 illustre schématiquement le fonctionnement des moyens de détection automatique d'une sortie du front de propagation de l'objet imagé en un point courant, dans un premier mode de réalisation de l'invention,
- la figure 3 illustre schématiquement le fonctionnement des moyens de détection automatique d'une sortie du front de propagation de l'objet imagé en un point courant, dans un second mode de réalisation de l'invention,
- la figure 4 représente un diagramme schématique d'une station d'imagerie médicale selon le second mode de réalisation de l'invention,
- les figures 5 et 6 illustrent schématiquement le fonctionnement des moyens de détection automatique d'une sortie du front de propagation de l'objet imagé en un point courant dans un troisième mode de réalisation de l'invention.

De multiples modalités d'acquisition peuvent bénéficier de l'invention au sein d'une station d'imagerie médicale selon l'invention. Dès lors qu'une image présentant des niveaux de gris peut être obtenue à l'aide de la modalité utilisée par les moyens d'acquisition de la station d'imagerie médicale, la station médicale selon l'invention est avantageusement utilisée. Ainsi, des images obtenues par techniques ultrasonores, radiologiques ou encore de résonance magnétique peuvent être traitées par une station d'imagerie médicale selon l'invention. L'invention sera particulièrement avantageuse pour le traitement d'images représentant des objets longilignes : vaisseaux...

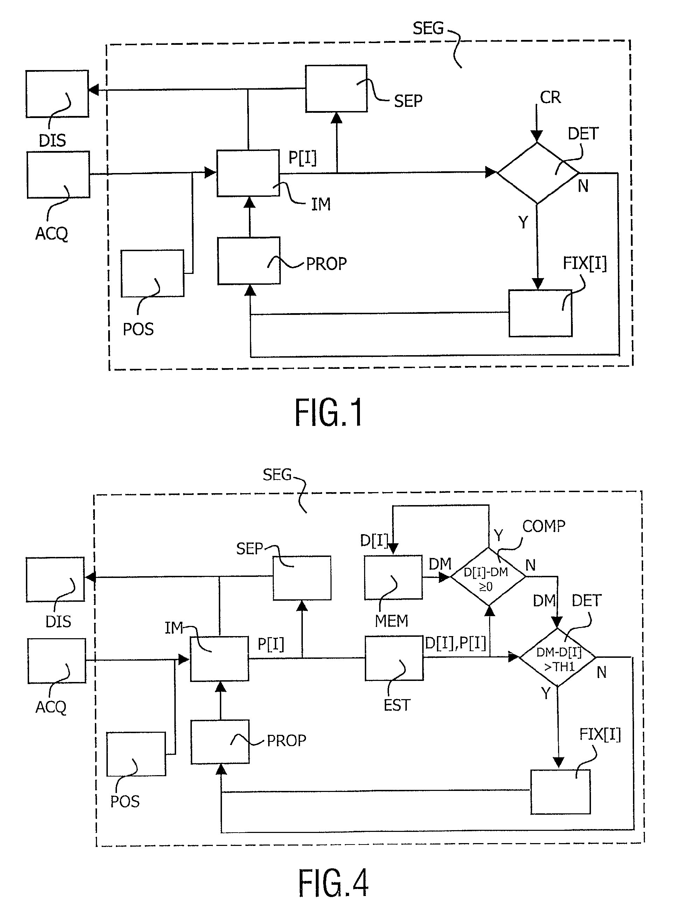

La figure 1 représente un diagramme schématique d'une station d'imagerie médicale selon l'invention. Cette station inclut des moyens d'acquisition ACQ pour obtenir des images présentant des niveaux de gris, des moyens d'affichage DIS pour afficher les images avantageusement la segmentation et éventuellement son évolution, en deux ou trois dimensions. La station d'imagerie médicale inclut des moyens de segmentation SEG pour segmenter au moins un objet imagé dans une image IM par propagation d'un front à partir d'au moins un point initial positionné dans l'image IM sur l'objet imagé par des moyens de positionnement de points POS. Les moyens de segmentation SEG incluent des moyens de propagation PROP d'un front au sein de l'image IM. Cette propagation est figurée sur la figure 1 par la lettre I qui représente une référence à chaque point de l'image I, la lettre I s'incrémentant pour balayer la totalité de l'image selon les équations de propagation du front. Ainsi, les moyens de propagation PROP font propager le front sur les points P[I] de l'image IM en incrémentant I et en faisant correspondre à la valeur I, un point P[I] suivant choisi d'une manière correspondant aux équations de propagation. Le calcul de coût, utile à un algorithme de plus court chemin, est réalisé de proche en proche selon une discrétisation définie pour le Fast-Marching en utilisant les équations de propagation (Eikonal par exemple). Selon les descriptions de l'état de la technique, la vitesse de la propagation dépend du niveau de gris en chaque point dit point courant. Il est rappelé que les équations de propagation et les détails relatifs à cette propagation de front sont accessibles à l'homme du métier dans le livre de J.A. Sethian cité auparavant. Des moyens de séparation SEP permettent de séparer chaque point P[I] parcouru par le front comme appartenant à la segmentation de l'objet imagé. La segmentation est définie par les points parcourus P[I] par rapport aux points non parcourus. Dans l'état de la technique, la technique de segmentation par propagation de front est continue et ne s'arrête que, par exemple, lorsque l'ordre est donné par un utilisateur qui juge que la segmentation est correcte. Deux phénomènes sont alors gênants. D'une part, la segmentation par propagation d'un front dans une image fonctionne correctement lorsque les niveaux de gris entre l'intérieur d'un objet imagé et l'extérieur sont très différents, c'est-à-dire qu'il existe un fort contraste entre les deux zones. Lorsqu'en revanche le contraste est moins important, la segmentation « fuit» : des points n'appartenant pas à l'objet sont parcourus par le front. La segmentation obtenue est alors fausse avec les inconvénients que cela peut présenter en particulier dans le domaine médical. Cela est particulièrement un inconvénient pour les objets longilignes pour lesquels, la propagation se faisant dans toutes les directions indifféremment et ne possédant pas de critère d'arrêt dédié à l'éviter, le front se propage facilement et rapidement hors de l'objet dans les directions où l'objet possède la plus petite dimension. D'autre part et à l'extrême, si la propagation n'est pas arrêtée par l'utilisateur, la propagation du front se fait selon les équations ci-dessus présentées jusqu'à ce que la totalité de l'image soit parcourue. Aucune segmentation de l'image n'est alors réalisée. En effet, une segmentation utilisant un algorithme de plus court chemin se fait dans toutes les directions et ne s'arrête pas tant que la segmentation n'est pas arrêtée.
Un but de l'invention est de fournir des moyens de segmentation au sein d'une station d'imagerie médicale qui permette d'éviter les « fuites » de la propagation du front en dehors de l'objet imagé à segmenter, en particulier lorsque le contraste est faible et/ou que l'objet à imager est longiligne.
Dans une station d'imagerie médicale selon l'invention, les moyens de propagation du front PROP sont couplés avec des moyens de détection automatique DET d'une sortie du front de propagation de l'objet imagé en un point courant P[I], des moyens de fixation locale FIX[I] de la vitesse de propagation à zéro en ce point courant P[I] étant activés en cas de détection d'une sortie du front de propagation par les moyens de détection DET. Les moyens de détection DET fonctionnent selon l'un des modes de réalisation présentés dans la suite. Ces modes de réalisation utilisent chacun un test sur une caractéristique du point courant P[I] par rapport à une caractéristique externe CR fixée par ailleurs. Ces modes de réalisation sont indépendants et peuvent être utilisés seuls ou combinés entre eux de manière à fournir éventuellement une détection selon plusieurs critères.
Lorsque la détection est positive (cas Y), la vitesse est fixée à zéro par des moyens de fixation de la vitesse de propagation à zéro FIX puis la propagation est poursuivie par les moyens de propagation PROP pour un autre point de l'image pour lequel la vitesse de propagation n'est pas figée. Ce point n'est nécessairement pas dans la continuité (pris au sens de la propagation) du point qui a été figé. En effet, la structure même des équations de propagation fait qu'avec une vitesse nulle en un point, les points qui sont situés en voisinage avec ce point à l'extérieur de la zone segmentée ne peuvent faire partie des points sur lesquels le front se propage. Lorsque la détection est négative (cas N), la propagation est poursuivie par les moyens de propagation PROP pour un autre point de l'image. La fixation de la vitesse à zéro permet donc notamment d'arrêter localement la propagation alors que la propagation continue sur d'autres parties de l'image. Dans le cas particulier de vaisseaux, il est avantageux de « geler des points » en attribuant une valeur nulle à la vitesse en ces points et donc en rendant la vitesse en ces points indépendante de l'image.

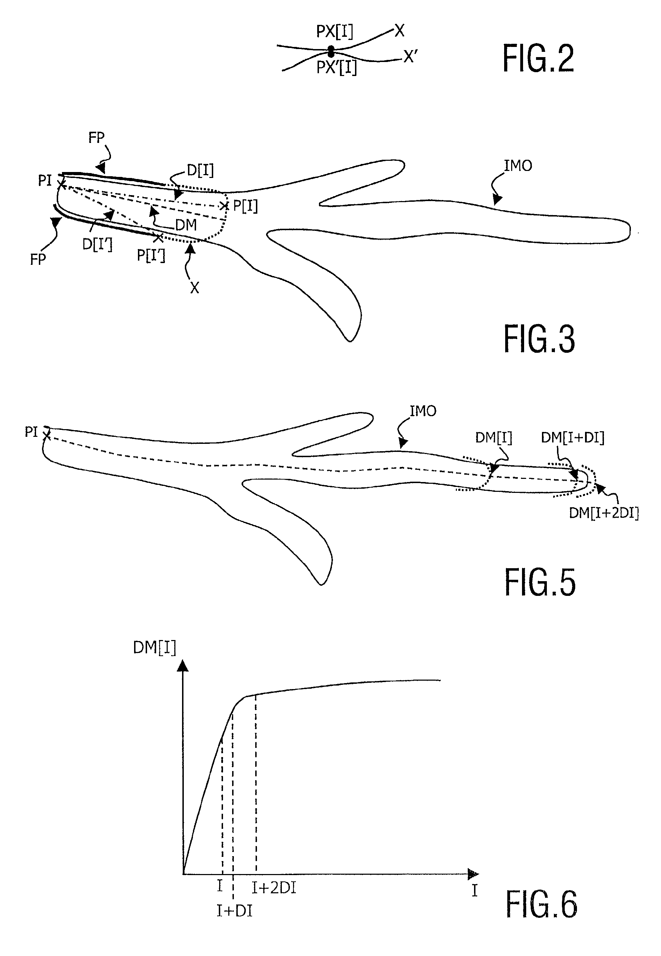

La figure 2 illustre schématiquement le fonctionnement d'un premier mode de réalisation de l'invention. Dans ce mode de réalisation, les moyens de propagation sont tels qu'en plus d'un premier front X se propageant dans l'image à partir d'un premier point initial, au moins un second front X' se propage dans l'image à partir d'au moins un second point initial positionné sur l'image sur un second objet. Le nombre de fronts se propageant en temps simultané dans l'image peut être variable en fonction par exemple du nombre de tissus différents imagés sur l'image (qui représentent en général différents objets imagés). Les moyens de détection automatique DET d'une sortie du front de propagation de l'objet imagé en un point courant PX[I] détectent si deux points adjacents PX[I] et PX'[I] appartiennent chacun à un front différent. Les moyens de fixation locale FIX[I] de la vitesse de propagation sont activés en deux points adjacents PX[I] et PX'[I] lorsque les deux points adjacents PX[I] et PX'[I] appartiennent chacun à un front différent, tel que représenté sur la figure 2. La propagation simultanée des fronts permet en effet de mettre en oeuvre une concurrence entre les fronts. La détection de l'appartenance à un front différent, l'appartenance à un front étant une caractéristique du point, est, par exemple, réalisée selon les connaissances de l'homme du métier par un test sur le critère CR d'appartenance à un autre front X' sur le point PX[I] sur lequel un front X se propage. Dans le cas où un front a déjà parcouru ce point, la vitesse du point est fixée à zéro selon l'invention pour les propagations des deux fronts X et X' concernés. Dans ce mode de réalisation, la segmentation est par exemple arrêtée quand tous les points de l'image ont été parcourus.

La figure 3 illustre schématiquement le fonctionnement des moyens de détection automatique DET d'une sortie du front X de propagation de l'objet imagé IMO en un point courant, dans un second mode de réalisation de l'invention. La figure 4 représente un diagramme schématique d'une station d'imagerie médicale selon le second mode de réalisation de l'invention. Sur la figure 3, les deux points P[I], P[I'] sont deux exemples d'un point courant (référencé P[I] sur la figure 4) pour lesquels le fonctionnement des moyens de détection DET est différent. Dans ce mode de réalisation, les moyens de détection automatique DET d'une sortie du front X de propagation de l'objet imagé IMO en un point courant utilisent des moyens d'estimation, référencés EST sur la figure 4, de la distance D[I], respectivement D[I'] du point du front parcouru P[I], respectivement P[I'] au point initial PI par rapport à la distance au point initial maximale DM atteinte par le front. Les distances sont calculées selon une technique connue de l'homme du métier, par exemple, dans l'article inclus par référence de T. Deschamps et L.D. Cohen, « Minimal paths in 3D images and application to virtual endoscopy », Proc. 6th European on Computer Vision, ECCV 2000, Dublin, June/July 2000 In : Lecture Notes in Computer Science, vol.1843, 2000, 543-557. Les moyens de fixation FIX[I] de la vitesse de la propagation à zéro sont activés lorsque la différence entre les deux distances DM et D[I] est supérieure à un seuil de distance TH . Sur la figure 3, on voit ainsi que la différence entre D[I] et DM est petite alors que celle entre D[I'] et DM est plus grande. La vitesse au point P[I'] est figée si la différence entre D[I'] et DM est supérieure à un seuil de distance TH. La valeur du seuil est avantageusement choisie proche du diamètre de l'objet à imager. C'est ce qui est proposé sur la figure 3. Ainsi la vitesse du front est déjà fixée à zéro en les points FP. Ainsi, ici le point P[I'], situé à la frontière des points dont la vitesse est fixée à zéro, apparaît comme étant dans le cas Y de la figure 4 : la vitesse du front au point P[I'] est fixée à zéro par les moyens de fixation FIX. En revanche, le point P[I] est tel que le seuil de distance n'est pas atteint. La propagation continue donc par les moyens de propagation PROP qui choisissent alors un point voisin de P[I] qui sera à son tour testé par les moyens de détection DET. On remarque sur la figure 3 que la segmentation obtenue pour le début de l'objet imagé sur lequel la vitesse des points est fixée, suit bien les formes de l'objet. Dans le cas de la segmentation d'un vaisseau, la propagation continue le long du vaisseau mais est arrêtée pour des points où la vitesse est faible, c'est-à-dire ceux pour lesquels le niveau de gris ne permet pas une vitesse rapide et qui sont, dans ce cas, généralement hors du vaisseau, c'est-à-dire hors de l'objet à segmenter. La figure 3 illustre bien un tel cas. En pratique, la segmentation obtenue avec fixation de vitesse locale à zéro est rapide et de bonne qualité. La rapidité est assurée par le fait que le front ne se propage plus pour les points qui suivent les points figés. Les ressources de calcul sont ainsi économisées et l'opération de segmentation est accélérée.
La figure 4 présente des moyens pour déterminer quelle est la valeur de la distance au point initial maximale DM atteinte par le front. En chaque point P[I] où se propage le front, des moyens de comparaison COMP comparent D[I] à la dernière valeur DM stockée en mémoire MEM. Si D[I] est inférieure à DM, la valeur DM est transmise aux moyens de détection DET. Si D[I] est supérieure à DM, la valeur de D[I] est stockée en mémoire comme valeur de DM et cette nouvelle valeur est alors utilisée par les moyens de détection DET. DM est donc une fonction strictement croissante.
Les figures 5 et 6 concernent un troisième mode de réalisation de l'invention. Dans ce mode de réalisation, la figure 3 illustre schématiquement le fonctionnement des moyens de détection automatique DET d'une sortie du front X de propagation de l'objet imagé IMO. Le front X est représenté sur la figure à trois instants de propagation correspondant à I, I+DI, I+2DI. L'incrément DI est choisi selon des critères particuliers explicités dans la suite. Dans ce mode de réalisation, la distance maximale DM parcourue par le front est utilisée comme caractéristique des points courants par les moyens de détection DET de sortie de l'objet imagé par le front. La distance maximale DM, comme noté ci-avant, est une fonction croissante de l'itération I. La distance maximale DM évolue d'abord de manière rapide comme vu sur la figure 6. Cette évolution rapide correspond à la propagation à l'intérieur de l'objet où la propagation est rapide, les distances maximales DM correspondant aux points situés à l'intérieur. Cela est illustré par les distances DM[I] et DM[I+DI]. En revanche, lorsque le front sort de l'objet, c'est-à-dire, rencontre une zone où généralement le niveau de gris est différent, le front se propage moins vite tel qu'illustré sur la figure 6 par la distance maximale DM[I+2DI], Ainsi pour le même incrément d'itération DI, la distance maximale a moins évolué qu'auparavant lorsque le front allait vite. Cela est illustré sur la figure 6 par l'inclinaison de la pente de la courbe de la distance maximale en fonction de l'itération sur I. La détection de l'inclinaison de la pente de la courbe peut être réalisée par un test fait sur la différence entre la distance maximale au point courant DM[I+2DI] avec la distance maximale pour un point courant correspondant à une itération antérieure d'un incrément de DI : DM[I+DI]. La comparaison de cette différence DM[I+2DI] - DM[I+DI] avec la même différence calculée auparavant DM[I+DI] - DM[I] permet de détecter l'inclinaison de la pente. Ce suivi de la pente est un suivi de l'augmentation d'une distance au point initial maximale atteinte par le front. Les moyens de fixation de la vitesse de propagation du front à zéro sont activés en tous les points du front lorsque l'augmentation de la distance maximale est inférieure à un seuil d'augmentation, ce seuil d'augmentation se traduisant sur la figure 6 par une valeur seuil de pente. Cette détection pour l'itération I+2DI fait fixer la vitesse de propagation du front à zéro. La fixation de la vitesse de propagation est ici réalisée pour tous les points du front car la détection de la sortie du front de l'objet imagé est globale et non pas locale.
Les modes de réalisation des moyens de détection de sortie du front de l'objet imagé présentés peuvent être utilisés seuls ou en combinaison entre eux. Ainsi, on peut noter que la combinaison des deuxième et troisième modes de réalisation est particulièrement avantageuse.
En effet, la fixation de la vitesse de propagation locale à zéro en des points qui sont extérieurs à l'objet permet d'augmenter la pente de la courbe de la figure 6 car moins de points sont parcourus pour une même distance maximale (les points figés ne font plus l'objet d'une propagation). Ainsi l'inclinaison de la pente est plus importante et la détection du changement de pente est plus aisée. De cette manière, la segmentation est non seulement arrêtée quand, durant la propagation même, le front sort de l'objet imagé localement alors qu'une partie du front reste dans l'objet, mais de plus la propagation globale du front est arrêtée lorsque le front sort vraiment en totalité de l'objet imagé. Le troisième mode de réalisation est alors une manière d'arrêter totalement la segmentation de l'objet, n'impliquant donc aucune intervention de l'utilisateur. L'invention est donc particulièrement utile pour la segmentation automatique de l'objet : la segmentation se fait sans intervention de l'utilisateur sans « fuir » et en s'arrêtant automatiquement lorsque l'objet a été segmenté en entier.
L'invention concerne aussi un dispositif de segmentation destiné à être mis en oeuvre dans une station d'imagerie médicale. Un tel dispositif de segmentation SEG est présent sur la figure 1. Il inclut les moyens nécessaires à la mise en oeuvre de la segmentation selon l'un des modes de réalisation présentés ci-avant. Ainsi un mode de réalisation du dispositif de segmentation SEG selon l'invention est exposé sur la figure 4, décrit par les termes de moyens de segmentation. L'invention concerne également un procédé de segmentation tel qu'il est mis en oeuvre par l'utilisation des moyens de la station d'imagerie médicale selon les revendications ci-après.
Il existe de nombreuses façons de mettre en oeuvre les fonctions présentées dans les moyens et les étapes du procédé selon l'invention par des moyens logiciels et/ou matériels accessibles à l'homme du métier. C'est pourquoi les figures sont schématiques. Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permette de réaliser une fonction. Un procédé selon l'invention peut inclure des étapes spécifiques aux différents modes de réalisation décrits précédemment dans la description.
Bien que cette invention ait été décrite en accord avec les modes de réalisation présentés, un homme du métier reconnaîtra immédiatement qu'il existe des variantes aux modes de réalisation présentés, par exemple les moyens de détection automatique d'une sortie du front de propagation de l'objet imagé en un point courant peuvent utiliser des moyens d'estimation de la vitesse locale du front en ce point (par exemple par exploitation de mesures de distance), les moyens de fixation de la vitesse de la propagation à zéro étant activés pour une vitesse locale inférieure à un seuil de vitesse, et que ces variantes restent dans l'esprit et sous la portée de la présente invention.

## Revendications

1. Station d'imagerie médicale incluant des moyens d'acquisition pour obtenir des images présentant des niveaux de gris, des moyens d'affichage pour afficher les images, des moyens de segmentation pour segmenter au moins un objet imagé dans une image, à l'aide de moyens de propagation d'un front sur les points de l'image à partir d'au moins un point initial positionné dans l'image sur l'objet imagé par des moyens de positionnement de points, propagation dont la vitesse dépend desdits niveaux de gris en chaque point dit point courant, la segmentation étant réalisée entre les points parcourus par le front et les points non parcourus par le front, **caractérisée en ce que** les moyens de propagation du front sont couplés avec des moyens de détection automatique d'une sortie du front de propagation de l'objet imagé en un point courant, des moyens de fixation locale de la vitesse de propagation à zéro en ce point courant étant activés en cas de détection d'une sortie du front de propagation.

2. Station d'imagerie médicale selon la revendication 1, **caractérisée en ce que** les moyens de propagation font propager au moins un second front dans l'image à partir d'au moins un second point initial positionné sur l'image sur un second objet, les moyens de détection automatique d'une sortie du front de propagation de l'objet imagé en un point courant détectant si deux points adjacents appartiennent chacun à un front différent, les moyens de fixation locale de la vitesse de propagation étant activés en deux points adjacents lorsque les deux points adjacents appartiennent chacun à un front différent.

3. Station d'imagerie médicale selon la revendication 1, **caractérisée en ce que** les moyens de détection automatique d'une sortie du front de propagation de l'objet imagé en un point courant utilisent des moyens d'estimation de la vitesse locale du front en ce point, les moyens de fixation de la vitesse de la propagation à zéro étant activés pour une vitesse locale inférieure à un seuil de vitesse.

4. Station d'imagerie médicale selon la revendication 1, **caractérisée en ce que** les moyens de détection automatique d'une sortie du front de propagation de l'objet imagé en un point courant utilisent des moyens d'estimation de la distance du point du front parcouru au point initial par rapport à la distance au point initial maximale atteinte par le front, les moyens de fixation de la vitesse de la propagation à zéro étant activés lorsque la différence entre ces deux distances est supérieure à un seuil de distance.

5. Station d'imagerie médicale selon l'une des revendications 1 à 4, **caractérisée en ce que** les moyens de détection automatique d'une sortie du front de propagation de l'objet imagé en un point courant utilisent des moyens de suivi de l'augmentation d'une distance au point initial maximale atteinte par le front, les moyens de fixation de la vitesse de propagation du front à zéro étant activés en tous les points du front lorsque l'augmentation de la distance maximale est inférieure à un seuil d'augmentation.

6. Dispositif de segmentation pour segmenter au moins un objet imagé dans une image présentant des niveaux de gris, à l'aide de moyens de propagation d'un front sur les points de l'image à partir d'au moins un point initial positionné dans l'image sur l'objet imagé par des moyens de positionnement de points, propagation dont la vitesse dépend desdits niveaux de gris en chaque point dit point courant, la segmentation étant réalisée entre les points parcourus par le front et les points non parcourus par le front, **caractérisée en ce que** les moyens de propagation du front sont couplés avec des moyens de détection automatique d'une sortie du front de propagation de l'objet imagé en un point courant, des moyens de fixation locale de la vitesse de propagation à zéro en ce point courant étant activés en cas de détection d'une sortie du front de propagation.

7. Procédé de segmentation d'un objet imagé dans une image présentant des niveaux de gris incluant une étape de propagation d'un front sur les points de l'image à partir d'au moins un point initial positionné dans l'image sur l'objet imagé dans une étape de positionnement de points dans l'image, propagation dont la vitesse dépend desdits niveaux de gris en chaque point dit point courant, la segmentation étant réalisée entre les points parcourus par le front et les points non parcourus par le front, **caractérisé en ce que** l'étape de propagation du front est couplée avec une étape de détection automatique d'une sortie du front de propagation de l'objet imagé en un point courant, une étape de fixation de la vitesse de propagation à zéro au point courant étant activée en cas de détection d'une sortir du front de propagation.

8. Produit programme d'ordinateur comprenant des portions/moyens/instructions de code de programme pour l'exécution des étapes du procédé selon la revendication 7 lorsque ledit programme est exécuté sur un ordinateur.
